# EUROPÄISCHE PATENTSCHRIFT

(11) **EP 4 127 509 B1**
(45) Veröffentlichungstag und Bekanntmachung des Hinweises auf die Patenterteilung: **07.05.2025**
(21) Anmeldenummer: 21712028.6
(22) Anmeldetag: 03.03.2021
(51) Int. Cl.: F16F 15/123, F16F 15/129, F16F 15/14

(54) **TORSIONSSCHWINGUNGSDÄMPFER MIT EINER ROTATIONSACHSE FÜR EINEN ANTRIEBSSTRANG**
TORSIONAL VIBRATION DAMPER HAVING AN AXIS OF ROTATION FOR A DRIVE TRAIN
AMORTISSEUR DE VIBRATIONS DE TORSION AYANT UN AXE DE ROTATION POUR UNE CHAÎNE CINÉMATIQUE

(30) Priorität: 26.03.2020 DE 102020108380
(43) Veröffentlichungstag der Anmeldung: 08.02.2023
(73) Patentinhaber: Schaeffler Technologies AG & Co. KG, 91074 Herzogenaurach (DE)
(72) Erfinder: LAU, Jennifer, 77855 Achern (DE); KAUFMANN, Romain, 67110 Gundershoffen (FR); WELLER, Uwe, 76229 Karlsruhe (DE); HELLER, Jean-Francois, 67100 Strassburg (FR); RUSCH, Alain, 67760 Gambsheim (FR)
(86) Internationale Anmeldenummer: PCT/DE2021/100217
(87) Internationale Veröffentlichungsnummer: WO 2021/190696

(56) Entgegenhaltungen:
- JP-A- 2008 304 008
- US-A1- 2005 076 739
- US-A1- 2011 120 832
- US-A1- 2011 195 793

## Beschreibung

Die vorliegende Erfindung betrifft einen Torsionsschwingungsdämpfer mit einer Rotationsachse für einen Antriebsstrang.

Aus dem Stand der Technik sind Torsionsschwingungsdämpfer bekannt, welche in einem Antriebsstrang, beispielsweise in einem Kraftfahrzeug, eingesetzt werden, um die Auswirkungen von Drehmomentschwankungen zu mildern. Die Antriebsstränge von Kraftfahrzeugen müssen zudem vor Drehmomentüberhöhungen geschützt werden und aufgrund des steigenden Elektrifizierungsgrads der Antriebsstränge von Kraftfahrzeugen ist deren Empfindlichkeit für solche Drehmomentüberhöhungen erhöht. Dafür ist ein Drehmomentbegrenzer in den Torsionsschwingungsdämpfer integriert. Weiterhin umfasst der Torsionsschwingungsdämpfer einen Dämpfer für Drehmomentschwankungen. Bei den Torsionsschwingungsdämpfern mit einem Nabenflansch tritt ein erhöhter Verschleiß der Schraubendruckfedern auf, welcher erst zur Verschlechterung der Performance des Dämpfers (Lärm) und zum Schluss zum Bruch der Schraubendruckfeder führt. Um den Verschleiß zu verringern, werden Mehrnabenflansche mit zwei oder mehr Flanschen eingesetzt. Dies hat den Vorteil, dass die Druckenden der Schraubendruckfedern ausschließlich an den Flanschen ansetzen und die Seitenbleche über die Flansche drehmomentübertragend verbunden sind, beispielsweise mittels Bolzen. Zudem sind die Schraubendruckfedern mittels der Flansche führbar.

Das Dokument US 2005/076739 A1 wird als nächstliegender Stand der Technik betrachtet.

Hiervon ausgehend liegt der vorliegenden Erfindung die Aufgabe zugrunde, die aus dem Stand der Technik bekannten Nachteile zumindest teilweise zu überwinden. Insbesondere soll das ausgangsseitige bzw. das getriebeseitige Massenträgheitsmoment des Torsionsschwingungsdämpfers verringert werden.

Erfindungsgemäß gelöst wird diese Aufgabe durch einen Torsionsschwingungsdämpfer gemäß Anspruch 1 mit einer Rotationsachse für einen Antriebsstrang, aufweisend zumindest die folgenden Komponenten:
- einen Mehrflanschdämpfer mit einer Mehrzahl von Flanschen zum schubmomentabhängigen und zugmomentabhängigen Dämpfen von Torsionsschwingungen;
- eine Drehmomentbegrenzereinheit, die radial innerhalb des Mehrflanschdämpfers angeordnet ist, und die Innenlamellen und Außenlamellen zum Begrenzen eines maximal übertragbaren Drehmoments aufweist;
- eine Außennabe, die radial innerhalb des Mehrflanschdämpfers und radial außerhalb der Drehmomentbegrenzereinheit angeordnet ist, und die den Mehrflanschdämpfer mit der Drehmomentbegrenzereinheit drehmomentübertragend verbindet; und
- eine Innennabe, die radial innerhalb der Drehmomentbegrenzereinheit zum Anschließen an eine Getriebeeingangswelle angeordnet ist,
wobei die Außennabe eine Außenverzahnung aufweist, die im schubmomentabhängigen und zugmomentabhängigen wechselnden Eingriff mit den Flanschen des Mehrflanschdämpfers steht, und wobei die Außennabe eine Innenverzahnung aufweist, in die die Außenlamellen der Drehmomentbegrenzereinheit eingehängt sind.

Bevorzugte Ausführungsbeispiele sind in den abhängigen Ansprüchen dargelegt.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der hier vorgeschlagene Torsionsschwingungsdämpfer ist dazu eingerichtet, in einem Antriebstrang, bevorzugt in einem elektrifizierten Antriebstrang, Torsionsschwingungen und Drehmomentüberhöhungen zu mildern, wobei auf geringem Bauraum eine hohe Verschleißbeständigkeit erreicht wird. Der hier vorgeschlagene Torsionsschwingungsdämpfer umfasst zum Dämpfen von Torsionsschwingungen einen Mehrflanschdämpfer, welcher zwei oder mehr Flansche umfasst, oftmals als Nabenflansche bezeichnet. Diese Flansche sind mittels Energiespeicherelementen, beispielsweise Schraubendruckfedern oder Bogenfedern, zueinander elastisch vorgespannt, sodass ein Drehmoment von einem Flansch auf den anderen Flansch einzig mittels des Energiespeicherelements übertragbar ist. In einer bevorzugten Ausführungsform sind drei oder mehr Flansche vorgesehen, wobei ein erster (Naben-) Flansch motorseitig angeordnet ist und unmittelbar zur Aufnahme eines motorseitigen Drehmoments eingerichtet ist. Auf der gegenüberliegenden Seite ist ein getriebeseitiger (Naben-) Flansch vorgesehen, welcher mit einer Nabe zum Verbinden mit einer Getriebeeingangswelle unmittelbar drehmomentübertragend verbunden ist. Zwischen diesen beiden Nabenflanschen ist zumindest ein (Mittel-) Flansch vorgesehen, welcher allein über ein jeweils zumindest ein nabenflanschseitiges Energiespeicherelement mit den beiden Nabenflanschen einzig elastisch verbunden ist. Die beiden Nabenflansche sind nicht unmittelbar miteinander in einem drehmomentübertragenden Kontakt.

Weiterhin ist eine Drehmomentbegrenzereinheit vorgesehen, welche zum Übertragen eines vorbestimmten maximalen Drehmoments eingerichtet ist und bei einem anliegenden Drehmoment oberhalb des vorbestimmten maximalen Drehmoments (Drehmomentüberhöhung) öffnet. Somit ist dieses maximal übertragbare Drehmoment das Maximum, welches die jeweils andere Seite der Drehmomentbegrenzereinheit sieht.

Hier ist vorgeschlagen, dass die Drehmomentbegrenzereinheit getriebeseitig angeordnet ist, sodass der Mehrflanschdämpfer nicht mit einem Drehmoment oberhalb des maximal übertragbaren Drehmoments belastet wird. Somit ist der Mehrflanschdämpfer vor einer solchen (Verschleiß verursachenden) Belastung geschützt. Die Drehmomentbegrenzereinheit ist hier zwischen einer Innennabe und einer Außennabe angeordnet, wobei die Innennabe unmittelbar mit einer Getriebeeingangswelle oder einem weiteren Zwischenelement (wie beispielsweise einer Kupplung oder einem Zweimassenschwungrad) mit der Getriebeeingangswelle verbunden ist.

Die Außennabe ist dazu eingerichtet, dass der Mehrflanschdämpfer unmittelbar mit dieser Außennabe in drehmomentübertragenden Kontakt steht. Besonders bevorzugt ist die Außennabe hin zu dem Mehrflanschdämpfer derart ausgeführt, dass die Flansche des Mehrflanschdämpfers auf der Außennabe zentriert sind. Zwischen der Außennabe und der Innennabe ist die Drehmomentbegrenzereinheit vorgesehen. Wenn beispielsweise die Drehmomentbegrenzereinheit als Lamellenbegrenzer mit Außenlamellen und Innenlamellen ausgeführt ist, sind die Außenlamellen in der Außennabe und die Innenlamellen in der Innennabe eingehängt. Bei einer solchen Ausführungsform der Drehmomentbegrenzereinheit als Lamellenbegrenzer sind bevorzugt die Außenlamellen als Reibbeläge und die Innenlamellen als die metallischen (beispielsweise Stahl-) Lamellen, bevorzugt ohne Reibbeläge, ausgeführt.

Vorzugsweise weist der Drehmomentbegrenzereinheit ein Vorspannmittel und ein Gegenlager auf, zwischen denen die Innenlamellen und Außenlamellen zum Begrenzen des zwischen der Innennabe und der Außennabe maximal übertragbaren Drehmoments in axialer Richtung abwechselnd angeordnet sind. Das Vorspannmittel und das Gegenlager sind axial an der Außennabe abgestützt.

Weiterhin ist es von Vorteil, wenn das Vorspannmittel und das Gegenlager radial innerhalb der Außennabe angeordnet sind.

Vorzugsweise ist das Gegenlager einstückig mit der Außennabe gebildet, und das Vorspannmittel ist mittels eines Sicherungsrings in der Außennabe axial abgestützt ist. Alternativ ist das Gegenlager mittels eines Sicherungsrings gebildet, und das Vorspannmittel ist mittels eines einstückigen Innenabsatzes der Außennabe axial abgestützt.

Es wird vorgeschlagen, dass die Vorspannmittel für die Drehmomentbegrenzereinheit und das dazu antagonistische Gegenlager jeweils axial an der Außennabe abgestützt sind. Beispielsweise ist das Vorspannmittel eine Tellerfeder (beziehungsweise ein Tellerfederpaket) und das Gegenlager ein Ring und die Reibpartner der Drehmomentbegrenzereinheit sind mittels des Vorspannmittels gegen das Gegenlager derart miteinander verpresst, dass maximal ein vorbestimmtes Drehmoment übertragbar ist. Wenn dieses vorbestimmte Drehmoment überschritten ist (Drehmomentüberhöhung), dann heben die Reibpartner voneinander ab und ein Teil des eingetragenen Drehmoments wird in Abwärme dissipiert.

Die hier vorgeschlagene Ausführungsform des Torsionsschwingungsdämpfers weist ein besonders geringes getriebeseitiges Massenträgheitsmoment auf, weil die Drehmomentbegrenzereinheit vollständig radial-innerhalb der Außennabe angeordnet ist. Es wird damit bei einem Durchrutschen der Drehmomentbegrenzereinheit einzig die Innennabe (gegebenenfalls mit den Innenlamellen) mitgenommen. Auch das Vorspannmittel und das Gegenlager sind nämlich an der Außennabe abgestützt und werden daher dann nicht mitgenommen.

In einer bevorzugten Ausführungsform ist die Außennabe als spanend hergestelltes Bauteil ausgeführt, beispielsweise mittels Drehen und/oder Stoßen. Ein solches Bauteil ist sehr kompakt und mit einer hohen Festigkeit ausführbar und zugleich kostengünstig fertigbar. In einer anderen Ausführungsform ist die Außennabe mittels Sintern oder mittels (bevorzugt kaltem) Fließpressen erzeugt. Es sind auch andere Fertigungsverfahren einsetzbar, wobei dies nach mechanischen Anforderungen, Stückzahl und einem gesteckten Kostenrahmen auszuwählen ist. In einer Ausführungsform ist die Innennabe gleichartig wie die Außennabe gefertigt.

In einer bevorzugten Ausführungsform der Außennabe ist die Anzahl der (Innen-) Zähne der Innenverzahnung größer als die Anzahl der (Außen-) Zähne der Außenverzahnung. Besonders bevorzugt entspricht die Anzahl der Innenzähne einem Vielfachen der Anzahl der Außenzähne. Damit ist ein vorteilhafter Spannungsverlauf in der Außennabe erzielt.

Es ist von Vorteil, wenn der Mehrflanschdämpfer zumindest einen Anschlag aufweist, mit dem einer der Flansche bei Schubmomentübertragung in Anlage kommen kann, und mit demselben ein andere der Flansche bei Zugmomentübertragung in Anlagen kommen kann, wobei die Anlage des jeweiligen Flansches am Anschlag spielfrei ist, während der gleichzeitige Eingriff des jeweiligen Flansches mit der Außennabe spielbehaftet ist. Somit ist der Mehrflanschdämpfer auf der Außennabe schwimmend gelagert. Spielbehaftet im Sinne einer schwimmenden Lagerung bedeutet in diesem Zusammenhang ein Spiel in der Verzahnung, das größer als 0,0 mm und kleiner als 0,5 mm ist, wodurch zum einen Herstelltoleranzen ausgeglichen werden können, und zum anderen Klappergeräusche verhindert werden können. Wäre dagegen die Anlege des Flansches am Anschlag spielbehaftet, würde dies zu Klappergeräuschen führen.

Der hier vorgeschlagene Torsionsschwingungsdämpfer entspricht zumindest funktional dem zuvor beschriebenen Torsionsschwingungsdämpfer, wobei das Vorspannmittel und das Gegenlager der Drehmomentbegrenzereinheit lediglich optional in der Außennabe abgestützt sind. Hier ist nun vorgeschlagen, dass alternativ oder zusätzlich zu der vorhergehenden Beschreibung der Torsionsschwingungsdämpfer eine Außennabe aufweist, welche derart eingerichtet ist, dass die Flansche des Mehrflanschdämpfers auf der Außennabe schwimmend gelagert sind. Indem die Flansche des Mehrflanschdämpfers auf der Außennabe schwimmend gelagert sind, sind die Flansche von den Kräften, welche zum Vorspannen der Komponenten der Drehmomentbegrenzereinheit benötigt werden, freigestellt und können sich allein entsprechend den Bedingungen, welche in einem Mehrflanschdämpfer vorliegen, bewegen und die Komponenten des Mehrflanschdämpfers werden entsprechend (gering) belastet. Dies ist besonders dann vorteilhaft, wenn zusätzlich (wie nachfolgend vorgeschlagen) ein Hysterese-Element vorgesehen ist, weil das Hysterese-Element nicht mit Kräften ausgehend von der Drehmomentbegrenzereinheit beziehungsweise deren Vorspannmittel beaufschlagt ist.

In dieser Ausführungsform sind sowohl das Vorspannmittel und das Gegenlager an der Außennabe abgestützt als auch der Mehrflanschdämpfer auf der Außennabe schwimmend gelagert. Dies führt zu einer kompakten und einfachen Konstruktion mit dem genannten Vorteil der geringen Belastung des Mehrflanschdämpfers.

Es wird weiterhin in einer vorteilhaften Ausführungsform des Torsionsschwingungsdämpfers vorgeschlagen, dass das Gegenlager einstückig mit der Außennabe gebildet ist und das Vorspannmittel mittels eines Sicherungsrings in der Außennabe axial abgestützt ist oder das Gegenlager mittels eines Sicherungsrings gebildet ist und das Vorspannmittel mittels eines einstückigen Innenabsatzes der Außennabe axial abgestützt ist, wobei bevorzugt die Außennabe als spanend hergestelltes Bauteil ausgeführt ist, wobei bevorzugt die Außennabe einen Außenabsatz aufweist, mit welchem zusammen mit einem der Flansche ein Hysterese-Element gebildet ist.

Hier ist in einer ersten Ausführungsform vorgeschlagen, dass das Gegenlager einstückig mit der Außennabe gebildet ist, also nicht als separates Bauteil mit der Außennabe erst noch verbunden werden muss, sondern bei der Montage des Torsionsschwingungsdämpfers bereits von der Außennabe einstückig gebildet ist. Dabei ist nicht ausgeschlossen, dass das Gegenlager in einem Vormontageschritt zunächst mit der Außennabe verbunden worden ist, beispielsweise mittels Schweißen. Weiterhin ist hier vorgeschlagen, dass das Vorspannmittel mittels eines Sicherungsrings, welcher beispielsweise als Federring ausgeführt sich nach radial-außen spannt und in eine entsprechende Nut in der Außennabe einsetzbar ist, abgestützt ist.

Hier ist in einer zweiten (alternativen) Ausführungsform vorgeschlagen, dass das Gegenlager von einem Sicherungsring gebildet ist, welcher beispielsweise sich nach radial-außen spannt und in eine entsprechende Nut in der Außennabe einsetzbar ist, abgestützt ist. Weiterhin ist ein (nach radial-innen gerichteter) Innenabsatz einstückig mit Außennabe gebildet, also nicht als separates Bauteil mit der Außennabe erst noch verbunden werden muss, sondern bei der Montage des Torsionsschwingungsdämpfers bereits von der Außennabe einstückig gebildet ist. Dabei ist nicht ausgeschlossen, dass der Innenabsatz in einem Vormontageschritt zunächst mit der Außennabe verbunden worden ist, beispielsweise mittels Schweißen. Das Vorspannmittel ist axial an diesem Innenabsatz axial abgestützt.

Beispielsweise bei einer Ausführungsform der Drehmomentbegrenzereinheit als Lamellenbegrenzer sind somit (in beiden vorgenannten Ausführungsformen) die Lamellen in der gewünschten Reihenfolge in die Außennabe (und in die Innennabe) einführbar und abschließend das Vorspannmittel beziehungsweise das Gegenlager aufsetzbar. Mittels des Sicherungsrings in der Außennabe ist die Reaktionskraft auf die gewünschte Vorspannung axial abgestützt. An der Innennabe ist lediglich eine Lagesicherung, beispielsweise eine schwimmende Lagerung, zu (gegebenenfalls den Innenlamellen) der Drehmomentbegrenzereinheit gebildet. Bei einer Drehmomentüberhöhung wird nun einzig der innere Reibpartner (beispielsweise die Innennabe mit den Innenlamellen) getriebeseitig mitrotiert, sodass das getriebeseitige Massenträgheitsmoment (zumindest bezogen auf den Torsionsschwingungsdämpfer) besonders gering ist.

In einer bevorzugten Ausführungsform weist die Außennabe einen Außenabsatz auf, welcher als axiale Anlage für einen Nabenflansch des Mehrflanschdämpfers eingerichtet ist. Besonders bevorzugt ist diese axiale Anlage mit einer vorbestimmten Vorspannung und einem vorbestimmten Reibungskoeffizienten ausgeführt, gegebenenfalls mit einem dazwischen angeordneten Reibbelag, sodass ein Hysterese-Element gebildet ist (vergleiche nachfolgende Ausführungen). In einer anderen Ausführungsform ist die Außenverzahnung der Außennabe mit zumindest einer Axialstirnfläche, bevorzugt zwei Axialstirnflächen, ausgeführt, mittels welchem für den Mehrflanschdämpfer, bevorzugt mit beiden oder eine der Seitenscheiben beispielsweise in nachfolgend beschriebener Ausführungsform, eine axiale Anlage gebildet ist.

Es wird weiterhin in einer vorteilhaften Ausführungsform des Torsionsschwingungsdämpfers vorgeschlagen, dass innennabenseitig und/oder außennabenseitig ein Vordämpfer vorgesehen ist.

Hier ist vorgeschlagen, dass der Torsionsschwingungsdämpfer weiterhin zumindest einen Vordämpfer umfasst, beispielsweise gegen ein Schlaggeräusch bei einem schnell ausgeführten Kuppelvorgang beim Leerlauf oder einer ähnlichen Situation in einem Antriebsstrang. In einer Ausführungsform ist jeweils ein Vordämpfer für die beiden Drehmomentrichtungen (im Kraftfahrzeug als Zugmoment und als Schubmoment bezeichnet) vorgesehen. In einer Ausführungsform ist ein einziger Vordämpfer vorgesehen, wobei bevorzugt dieser derart angeordnet ist, dass er für beide Drehmomentrichtungen wirksam ist, beispielsweise an dem gegebenenfalls vorgesehenen Mittelflansch. In einer Ausführungsform ist zumindest einer der Vordämpfer vor beziehungsweise an der Innennabe, vor beziehungsweise an der Außennabe oder vor beziehungsweise an einem der (Naben-) Flansche angeordnet.

Es wird weiterhin in einer vorteilhaften Ausführungsform des Torsionsschwingungsdämpfers vorgeschlagen, dass zumindest drei Flansche zueinander in Reihe geschaltet sind.

Bei dieser Ausführungsform sind die zumindest drei Flansche zueinander in Reihe geschaltet, indem die Flansche über Energiespeicherelemente an dem jeweils in Umlaufrichtung (beziehungsweise in Richtung der Verdrehwinkel) unmittelbar benachbarten Flansch abgestützt sind. Eine Drehungleichförmigkeit wird somit zunächst in einen ersten (Naben-) Flansch, dann in einen in Umlaufrichtung unmittelbar benachbarten (Mittel-) Flansch und von dem in Umlaufrichtung unmittelbar benachbarten (Mittel-) Flansch wiederum in den in Umlaufrichtung unmittelbar benachbarten (Naben-) Flansch (und bei mehr als drei Flanschen entsprechend fortgesetzt) übertragen. Dies gilt je nach Richtung des Drehmomenteinschlags entsprechend ausgehend von der Motorseite oder von der Getriebeseite beziehungsweise von der Seite der Drehmomentbegrenzereinheit. Bevorzugt sind die Nabenflansche (radial-innen) mit der Außennabe und (radial-außen) mit der zumindest einen Seitenscheibe gemäß der nachfolgenden Beschreibung drehmomentübertragend verbunden und der zumindest eine Mittelflansch ist einzig an den Nabenflanschen drehmomentübertragend abgestützt, und bevorzugt mittels der Außennabe zentriert. Besonders bevorzugt ist ein gestaffeltes Ansprechverhalten der Flansche eingerichtet, indem ein weicheres Energiespeicherelement zwischen dem ersten (Naben-) Flansch und dem zumindest einen mittleren Flansch und ein im Vergleich dazu härteres Energiespeicherelement zwischen dem zweiten (Naben-) Flansch und dem zumindest einen mittleren Flansch angeordnet ist. Die Energiespeicherelemente sind bevorzugt jeweils Schraubendruckfedern, beispielsweise Federpakete mit zumindest einer Innenfeder und einer Außenfeder. Besonders bevorzugt sind die Schraubendruckfedern allesamt mit geraden Federachsen ausgeführt.

Es wird weiterhin in einer vorteilhaften Ausführungsform des Torsionsschwingungsdämpfers vorgeschlagen, dass weiterhin zumindest ein Fliehkraftpendel vorgesehen ist, wobei bevorzugt zumindest eines der Fliehkraftpendel an einem axial-mittleren Flansch von zumindest drei Flanschen fixiert ist.

Oftmals ist eine große Geräuschemission an einem Kraftfahrzeug nicht erwünscht. Hierfür ist es vorteilhaft ein Fliehkraftpendel vorzusehen. Das Fliehkraftpendel ist hier vorschlagsgemäß an den Torsionsschwingungsdämpfer angebunden, sodass vorbestimmte Schwingungsfrequenzen des übertragenen Drehmoments tilgbar sind. Das Fliehkraftpendel ist bevorzugt motorseitig der (Außen-) Nabe, also bei dem Mehrflanschdämpfer, angeordnet. Damit ist das Massenträgheitsmoment getriebeseitig besonders gering.

In einer bevorzugten Ausführungsform ist das Fliehkraftpendel an einem Mittelflansch angebunden, sodass zum einen die Belastung der Nabenflansche gering ist und zum anderen die geräuscherzeugenden Frequenzen besonders frühzeitig motorseitig getilgt werden. Ein weiterer Vorteil ist, dass ein Fliehkraftpendel an dem Mittelflansch im Betrieb stets aktiv ist, weil der Mittelflansch stets frei ist, also aktiv an der Dämpfung beteiligt ist, während ein Nabenflansch in einer korrespondierenden Drehmomentrichtungen fest anliegt. In einer anderen Ausführungsform ist an zumindest einem der Nabenflansche ein Fliehkraftpendel fixiert, sodass eine spezifische drehmomentrichtungsabhängige Tilgung eingestellt ist.

Es wird weiterhin in einer vorteilhaften Ausführungsform des Torsionsschwingungsdämpfers vorgeschlagen, dass der Mehrflanschdämpfer zumindest eine Schraubendruckfeder mit gerader Federachse zwischen der Mehrzahl von Flanschen umfasst, wobei bevorzugt die zumindest eine Schraubendruckfeder radial einzig von zumindest einem der Flansche geführt ist.

Hier ist nun vorgeschlagen, dass der Mehrflanschdämpfer zumindest eine Schraubendruckfeder mit gerader Federachse aufweist, bevorzugt insgesamt vier Schraubendruckfedern mit jeweils gerader Federachse, von denen jeweils zwei zwischen einem ersten Nabenflansch und einem Mittelflansch und zwei zwischen dem Mittelflansch und dem anderen Nabenflansch von insgesamt drei Flanschen des Mehrflanschdämpfers angeordnet sind. Eine solche Bauweise erlaubt einen kompakten Aufbau und lange Verdrehwinkel, sodass damit große Drehmomentausschläge bei bestehender Dämpfungseigenschaft des Mehrflanschdämpfers ermöglichst sind. Zugleich sind Schraubendruckfedern mit gerader Federachsen in ihren Dämpfungseigenschaften einfach beherrschbar und kostengünstig in der Herstellung.

In einer bevorzugten Ausführungsform ist die zumindest eine Schraubendruckfeder radial einzig von zumindest einem der Flansche geführt, besonders bevorzugt mittels jeweils einer Zentriernase an den beiden Flanschen, an welchen die jeweilige Schraubendruckfeder ansetzt. Hierbei besteht bevorzugt zu anderen Bauteilen des Mehrflanschdämpfers oder des Torsionsschwingungsdämpfers kein Kontakt. Damit ist der Verschleiß der Schraubendruckfeder besonders gering.

In einer bevorzugten Ausführungsform sind die zumindest drei Flansche zueinander in Reihe geschaltet, bevorzugt mittels zuvor genannter Schraubendruckfedern, indem eine weichere Schraubendruckfeder zwischen dem ersten (Naben-) Flansch und dem zumindest einen mittleren Flansch und eine im Vergleich dazu härtere Schraubendruckfeder zwischen dem zweiten (Naben-) Flansch und dem zumindest einen mittleren Flansch angeordnet ist. Die Schraubendruckfedern sind bevorzugt zumindest teilweise als Federpakete ausgeführt, wobei in einer Ausführungsform zumindest eine (bevorzugt die innere) Feder des Federpakets kürzer als die längste Feder des Federpakets (bevorzugt nicht vorgespannt, besonders bevorzugt zu einem der benachbarten Flansche beabstandet) ist, sodass zunächst nur die (dauerhaft in Anlage gebrachte und verspannte) längste Feder in Kontakt mit den beiden benachbarten Flanschen ist und erst ab einem vorbestimmten relativen Verdrehwinkel der benachbarten Flansche die zumindest eine kürzere Feder wirksam wird. Damit ist eine stufige Federsteifigkeit mit einfachen Mitteln geschaffen. Besonders bevorzugt ist die äußerste Feder des Federpakets zentriert, beispielsweise mittels eines Zapfens oder Napfs, und die zumindest eine innere Feder mittels der äußersten Feder geführt. In einer Ausführungsform ist beispielsweise eine (einzige) äußere Schraubendruckfeder und eine (einzige) innere Schraubendruckfeder vorgesehen. Die äußere Schraubendruckfeder ist geführt und zentriert und die innere Schraubendruckfeder ist von der äußeren Schraubendruckfeder geführt. Die innere Schraubendruckfeder ist so viel kürzer als die äußere Schraubendruckfeder, dass die innere Schraubendruckfeder im nicht-eingefederten Zustand der äußeren Schraubendruckfeder einzig mit einem Flansch oder keinem Flansch in Kontakt steht, bevorzugt an einem Flansch, beispielsweise dem Mittelflansch, befestigt ist. Mit dem jeweils anderen Flansch, beispielsweise einem der Nabenflansche, ist die innere Schraubendruckfeder einzig dann in Kontakt, wenn die beiden Flansche um einen solchen Winkel gegeneinander verdreht sind, dass der zurückgelegte Weg der Längendifferenz der beiden Schraubendruckfedern des hier beschriebenen Federpakets entspricht beziehungsweise (dann mit einer Kraftübertragung der inneren Schraubendruckfeder) größer als diese Längendifferenz ist.

Es wird weiterhin in einer vorteilhaften Ausführungsform des Torsionsschwingungsdämpfers vorgeschlagen, dass zumindest eine Seitenscheibe zum Anschließen an eine Antriebswelle vorgesehen ist, wobei die zumindest eine Seitenscheibe anschlussseitig mit dem Mehrflanschdämpfer drehmomentübertragend verbunden ist, wobei bevorzugt die zumindest eine Seitenscheibe im Betrieb des Torsionsschwingungsdämpfers von der zumindest einen Schraubendruckfeder nach einer Ausführungsform gemäß der obigen Beschreibung beabstandet ist.

Bei dieser Ausführungsform ist vorgeschlagen, dass zumindest eine Seitenscheibe, besonders bevorzugt zwei Seitenscheiben als Paar jeweils axial seitlich der Flansche des Mehrflanschdämpfers, vorgesehen ist, wobei die Seitenscheibe, bevorzugt mittelbar, zum Anschließen an eine Antriebswelle eingerichtet ist. Beispielsweise ist die erste von zwei paarigen Seitenscheiben mit einem nach radial-außen vorstehenden Flansch ausgestattet, welcher mit einem Schwungrad einer Antriebswelle verbindbar ist, bevorzugt verschraubbar. Die zweite Seitenscheibe von zwei Seitenscheiben weist keinen solchen radialen Flansch auf und ist besonders bevorzugt axial-überlappend mit dem Anschluss der ersten Seitenscheibe zu der Antriebswelle, beispielsweise dem Schwungrad, angeordnet. Die zumindest eine Seitenscheibe weist einen Anschlag auf, bevorzugt die zwei Seitenscheiben einen Bolzen oder ein Nietblech, welcher in Umfangsrichtung mit den Nabenflanschen in drehmomentübertragenden Kontakt bringbar ist.

In einer bevorzugten Ausführungsform ist die zumindest eine Seitenscheibe derart angeordnet, dass die Schraubendruckfeder bei einer auslegungsgemäßen Belastung stets von der Seitenscheibe beabstandet ist, so dass kein Reibschluss zwischen der Seitenscheibe und der zumindest einen Schraubendruckfeder gebildet ist. Es sei darauf hingewiesen, dass bevorzugt auch kein reibungsreduzierendes Mittel zwischen der Seitenscheibe und der Schraubendruckfeder vorgesehen ist, sondern ein Luftspalt vorgesehen ist. Beispielsweise ist die zumindest eine Seitenscheibe derart eingerichtet, dass ein Austreten einer überlasteten, beispielsweise gebrochenen, Schraubendruckfeder mittels der Seitenscheibe verhinderbar ist, sodass umliegende Bauteile in diesem Katastrophenfall geschützt sind.

Die Seitenscheibe ist bevorzugt ein Blechbauteil, welches besonders bevorzugt mittels Kaltumformen, beispielsweise Prägen und/oder Stanzen, gebildet ist.

Es wird weiterhin in einer vorteilhaften Ausführungsform des Torsionsschwingungsdämpfers vorgeschlagen, dass zwischen der zumindest einen Seitenscheibe und einem der Flansche zumindest ein Hysterese-Element gebildet ist,
wobei bevorzugt unter axialer Hysterese-Vorspannung ein erster Flansch mit einer ersten Seitenscheibe in mittels eines Reibbelags reibschlüssigen Kontakt ist und ein zweiter Flansch mit einer zweiten Seitenscheibe in unmittelbarem reibschlüssigen Kontakt ist.

Hier ist nun vorgeschlagen, dass weiterhin zumindest ein Hysterese-Element gebildet ist, womit das Ansprechverhalten des Mehrflanschdämpfers verzögerbar ist. Somit wird erst ab einer vorbestimmten Drehmoment-Amplitude ein betreffender Flansch in Schwingung versetzt und unterhalb dieser vorbestimmten Drehmoment-Amplitude verbleibt der entsprechende Flansch in seiner Ausgangslage. In einer bevorzugten Ausführungsform weist der Mehrflanschdämpfer zwei Nabenflansche auf, wobei bevorzugt jeder Nabenflansch mit einem jeweils separaten, besonders bevorzugt unterschiedlich eingerichteten, Hysterese-Element ausgeführt ist. Besonders bevorzugt ist für beide Hysterese-Elemente ein einziges Vorspannmittel vorgesehen, wobei das Vorspannmittel beispielsweise eine Tellerfeder (beziehungsweise ein Tellerfederpaket) ist oder mittels einer Einbausituation, beispielsweise mittels Vernieten, gebildet ist.

In einer bevorzugten Ausführungsform sind zwischen der ersten Seitenscheibe und einem ersten Flansch ein Reibbelag vorgesehen, welcher ein erstes Hysterese-Element bildet, und zwischen der zweiten Seitenscheibe und dem zweiten Flansch ein unmittelbarer Kontakt gebildet, welcher ein zweites Hysterese-Element bildet. Bei einem unmittelbaren reibschlüssigen Kontakt zwischen dem zweiten Flansch und der zweiten Seitenscheibe ist der Reibungskoeffizient gering (beispielsweise Metall auf Metall). Dies bietet sich vor allem in einem Kraftfahrzeug für die sogenannte Schubrichtung an, also der Übertragung von einem (beispielsweise Rad-) Moment auf die Antriebsmaschine (vergleiche nachfolgend). Für die Zugrichtung in einem Kraftfahrzeug ist hingegen ein höherer Reibungskoeffizient vorteilhaft, wobei also eine höhere Drehmomentamplitude notwendig ist, um das Wirken des Mehrflanschdämpfers auszulösen. Hier ist die Verwendung eines Reibbelags in dem Hysterese-Element vorteilhaft.

Es wird weiterhin in einer vorteilhaften Ausführungsform des Torsionsschwingungsdämpfers vorgeschlagen, dass der Mehrflanschdämpfer axial benachbart drei oder mehr Flansche umfasst und der zumindest eine axial-mittlere Flansch auf der Außennabe zentriert ist und axial von jeweils zwei axial benachbarten Flanschen gelagert ist, bevorzugt mittels eines reibungsarmen Zentrierelements.

Bei dieser Ausführungsform ist vorgeschlagen, dass der Mehrflanschdämpfer axial benachbart drei oder mehr Flansche umfasst, wobei zumindest ein axial-mittlerer Flansch (Mittelflansch) gebildet ist. Dieser axial-mittlere Flansch ist auf der Außennabe zentriert, aber nicht in einem drehmomentübertragenden Kontakt mit der Außennabe. Einzig die beiden Nabenflansche sind zum (drehmomentrichtungsabhängigen) Übertragen eines Drehmoments mit der Außennabe eingerichtet und ebenfalls über die Außennabe zentriert. Somit sind die Flansche des Mehrflanschdämpfers alle zu der Außennabe zentriert.

In einer bevorzugten Ausführungsform ist der zumindest eine axial-mittlere Flansch mit einem Zentrierelement versehen, welches einen reibungsarmen Kontakt zu der Außennabe und/oder zu den axial-benachbarten Flanschen bewirkt. Ein solches Zentrierelement ist bevorzugt als Kunststoffteil auf den zumindest ein axial-mittleren Flansch formschlüssig aufgeklickt oder mit diesem auf diesen aufgespritzt. In einer besonders bevorzugten Ausführungsform ist das Spiel zwischen der Außennabe und dem Zentrierelement besonders gering und ganz besonders bevorzugt weist das Zentrierelement Einlaufeigenschaften auf, sodass fertigungsbedingte Abweichungen im Betrieb ausgleichbar sind.

Gemäß einem weiteren Aspekt wird ein Antriebsstrang vorgeschlagen, aufweisend zumindest die folgenden Komponenten:
- eine elektrische Antriebsmaschine mit einer Antriebswelle;
- zumindest einen Verbraucher; und
- einen Torsionsschwingungsdämpfer nach einer Ausführungsform gemäß der obigen Beschreibung,
wobei die Antriebswelle zum Drehmomentübertragen mittels des Torsionsschwingungsdämpfers mit dem zumindest einen Verbraucher schwingungsgedämpft und reibschlüssig begrenzt auf ein vorbestimmtes Maximaldrehmoment verbunden ist.

Der hier vorgeschlagene Antriebsstrang umfasst eine elektrische Antriebsmaschine, welche mit dem zumindest einen Verbraucher, beispielsweise in einem Kraftfahrzeug die Vortriebsräder, drehmomentübertragend, bevorzugt trennbar, verbunden ist. Mittels des Torsionsschwingungsdämpfers ist die elektrische Antriebsmaschine vor einer (verbraucherseitigen) Drehmomentüberhöhung geschützt und eine (zumindest verbraucherseitig induzierte) Drehmomentschwankung gedämpft, sodass die empfindliche elektrische Antriebsmaschine gut geschützt ist. Die Innennabe ist verbraucherseitig und der Mehrflanschdämpfer (beispielsweise mittels zumindest einer der Seitenscheiben) motorseitig angeordnet.

Der hier vorgeschlagene Antriebstrang ist besonders gut gegen Torsionsschwingungen gedämpft und die Antriebsmaschine vor einer getriebeseitigen Drehmomentüberhöhung geschützt, wobei aufgrund des geringen getriebeseitigem Massenträgheitsmoments die Belastung auf die Getriebekomponenten des Antriebsstrangs besonders gering ist.

Gemäß einem weiteren Aspekt wird ein Kraftfahrzeug vorgeschlagen, aufweisend zumindest ein Vortriebsrad, welches mittels eines Antriebsstrangs nach einer Ausführungsform gemäß der obigen Beschreibung antreibbar ist.

Der Bauraum ist gerade bei Kraftfahrzeugen aufgrund der zunehmenden Anzahl von Komponenten besonders gering und es ist daher besonders vorteilhaft, einen Antriebsstrang kleiner Baugröße zu verwenden. Mit dem Einsatz einer elektrischen Antriebsmaschine ist die Empfindlichkeit gegen störende Drehmomentschwankungen und Drehmomentüberhöhungen hoch, sodass eine wirksame Dämpfung solcher Drehmomentschwankungen und gute Begrenzung des maximal übertragbaren (radseitigen) Drehmoments, anzustreben ist.

Mit dem hier vorgeschlagenen Torsionsschwingungsdämpfer ist ein kostengünstiges und wenig Bauraum benötigendes Bauteil vorgeschlagen, welches eine hohe Lebensdauer aufweist und aufgrund des geringen getriebeseitigen Massenträgheitsmoments äußerst getriebeschonend ausgeführt ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: einen Torsionsschwingungsdämpfer im Schnitt;
- Fig. 2:: einen Torsionsschwingungsdämpfer mit einem Fliehkraftpendel;
- Fig. 3:: einen Torsionsschwingungsdämpfer mit einem Fliehkraftpendel in einer weiteren Ausführungsform;
- Fig. 4:: ein Schaltschema eines Torsionsschwingungsdämpfers ohne Vordämpfer;
- Fig. 5:: ein Schaltschema eines nicht beanspruchten Torsionsschwingungsdämpfers mit außennabenseitigem Vordämpfer;
- Fig. 6:: ein Schaltschema eines Torsionsschwingungsdämpfers mit innennabenseitigem Vordämpfer;
- Fig. 7a:: der Torsionsschwingungsdämpfer aus Fig. 1 im Schnitt, in der der Drehmomentfluss im Zugbetrieb eingetragen ist;
- Fig. 7b:: der Torsionsschwingungsdämpfer aus Fig. 1 in einer Draufsicht, in der der Drehmomentfluss im Zugbetrieb bei halbem Verdrehwinkel eingetragen ist;
- Fig. 7c:: der Torsionsschwingungsdämpfer aus Fig. 1 in einer Draufsicht, in der der Drehmomentfluss im Zugbetrieb bei vollem Verdrehwinkel eingetragen ist;
- Fig. 8a:: der Torsionsschwingungsdämpfer aus Fig. 1 im Schnitt, in der der Drehmomentfluss im Schubbetrieb eingetragen ist;
- Fig. 8b:: der Torsionsschwingungsdämpfer aus Fig. 1 in einer Draufsicht, in der der Drehmomentfluss im Schubbetrieb bei halbem Verdrehwinkel eingetragen ist;
- Fig. 8c:: der Torsionsschwingungsdämpfer aus Fig. 1 in einer Draufsicht, in der der Drehmomentfluss im Schubbetrieb bei vollem Verdrehwinkel eingetragen ist;
- Fig. 9:: der Torsionsschwingungsdämpfer aus Fig. 1 in einer Draufsicht; und
- Fig. 10:: ein Antriebsstrang mit einem Torsionsschwingungsdämpfer in einem Kraftfahrzeug.

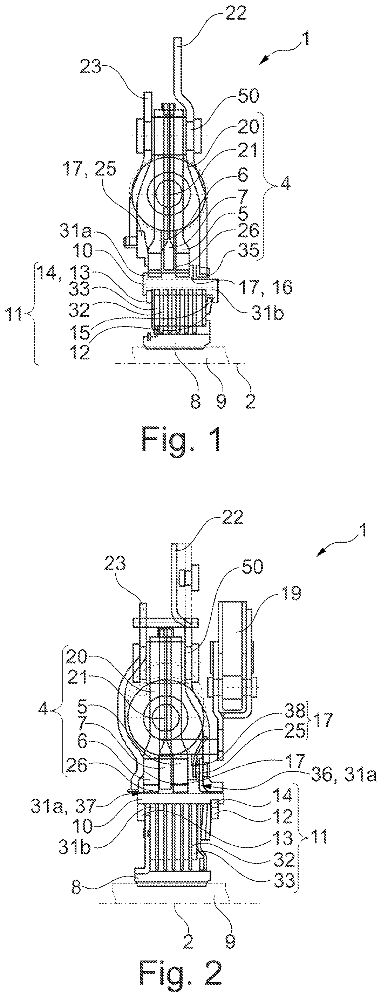

In Fig. 1 ist eine Prinzip-Skizze eines Torsionsschwingungsdämpfers 1 mit einer Rotationsachse 2 im Schnitt auf einer (gestrichelt dargestellten) Getriebeeingangswelle 9 gezeigt. Der Torsionsschwingungsdämpfer 1 umfasst einen Mehrflanschdämpfer 4 und eine zentral angeordnete Drehmomentbegrenzereinheit 11. Der Mehrflanschdämpfer 4 umfasst eine Schraubendruckfeder 20 mit einer geraden Federachse 21 und drei Flansche, nämlich einen (ersten) Nabenflansch 5 (darstellungsgemäß rechts), einen (zweiten) Nabenflansch 6 (darstellungsgemäß links) und einen axial-mittigen (Mittel-) Flansch 7. Die Nabenflansche 5,6 sind richtungsabhängig mit der Außenverzahnung 31a der Außennabe 10 drehmomentübertragend verbunden. Der Mittelflansch 7 ist auf der Außennabe 10, hier optional mittels eines Zentrierelements 26 und auf der Außenverzahnung 31a, zentriert. Das Zentrierelement 26 ist bevorzugt aus einem die Reibung verringernden Kunststoff hergestellt. An dem Torsionsschwingungsdämpfer 1 sind zwei Seitenscheiben 22,23 seitlich der Flansche 5,6,7 des Mehrflanschdämpfers 4 vorgesehen, wobei eine erste Seitenscheibe 22, zum Anschließen an eine Antriebswelle 24 eines Antriebsstranges 3 eingerichtet ist. Die Seitenscheiben 22,23 sind hier (optional) als Blechelemente ausgeführt. Um das Kraftfahrzeug 30 im Betrieb vor Drehmomenterhöhungen zu schützen, weist der Torsionsschwingungsdämpfer 1 eine Drehmomentbegrenzereinheit 11 auf. Die Drehmomentbegrenzereinheit 11 ist zwischen einer Innennabe 8 und einer Außennabe 10 angeordnet. Die Drehmomentbegrenzereinheit 11 umfasst ein Lamellenpaket mit einer Mehrzahl von Innenlamellen 32 und Außenlamellen 33, von denen hier pars-pro-toto jeweils eine bezeichnet ist. Die Außenlamellen 33 sind in der Außennabe 10 und die Innenlamellen 32 in der Innennabe 8 eingehängt, wobei die Außenlamellen 33 bevorzugt als Reibbeläge 25 und die Innenlamellen 32 als Metall-Lamellen (beispielsweise aus Stahl) gebildet sind. Zum Erzeugen der vorbestimmten Vorspannung auf das Lamellenpaket ist ein Vorspannmittel 12 vorgesehen, welches hier als Tellerfeder (beziehungsweise als Tellerfederpaket) ausgeführt ist. Das Vorspannmittel 12 und das dazu antagonistische Gegenlager 13 sind jeweils (antagonistisch) axial an der Außennabe 10 abgestützt. Das Gegenlager 13 ist hier (optional) mittels eines an der Außennabe 10 abgestützten Sicherungsrings 14 gebildet. Das Vorspannmittel 12 ist (optional) an einem mit der Außennabe 10 einstückig gebildeten Innenabsatz 15 abgestützt, wobei bevorzugt der Innenabsatz 15 mittels Stoßen aus einem rohrartigen Rohstück, aus welchem die Außennabe 10 (spanend) geformt ist, gebildet ist. Weiterhin ist (optional) bei beiden Nabenflanschen 5,6 jeweils ein Hysterese-Element 17 vorgesehen. Ein Hysterese-Element 17 ist zwischen dem zweiten Nabenflansch 6 und der axial gleichseitigen (zweiten) Seitenscheibe 23 gebildet, wobei ein Reibelement 34 zwischengeschaltet ist. Ein anderes Hysterese-Element 17 ist zwischen dem ersten Nabenflansch 5 und einem Außenabsatz 16 der Außennabe 10 gebildet. Die erste Seitenscheibe 22 ist (optional mittels einer Zentrierhülse 35) auf der Außennabe 10 zentriert und eine Anlage zu dem Außenabsatz 16 gebildet.

Die Außenverzahnung 31a der Außennabe 10 steht im schubmomentabhängigen und zugmomentabhängigen wechselnden Eingriff mit den Flanschen 5,6,7 des Mehrflanschdämpfers 4. Ferner weist die Außennabe 10 eine Innenverzahnung 31b auf, in die die Außenlamellen 33 der Drehmomentbegrenzereinheit 11 eingehängt sind. Der Mehrflanschdämpfer 4 weist zumindest einen Anschlag 50 auf, mit dem einer der Flansche 5,6,7 bei Schubmomentübertragung in Anlage kommen kann, und mit demselben ein andere der Flansche 5,6,7 bei Zugmomentübertragung in Anlagen kommen kann. Die Anlage des jeweiligen Flansches 5,6 am Anschlag 50 ist spielfrei, während der gleichzeitige Eingriff des jeweiligen Flansches 5,6 mit der Außennabe (insbesondere bei vollem Verdrehwinkel) spielbehaftet ist. Zwischen dem Vorspannmittel 12 und dem Gegenlager 13 sind die Innenlamellen 32 und die Außenlamellen 33 zum Begrenzen des zwischen der Innennabe 8 und der Außennabe 10 maximal übertragbaren Drehmoments in axialer Richtung abwechselnd angeordnet sind. Das Vorspannmittel 12 und das Gegenlager 13 sind axial an der Außennabe 10 abgestützt. Ferner sind Vorspannmittel 12 und das Gegenlager 13 radial innerhalb der Außennabe 10 angeordnet sind. Das Gegenlager 13 ist einstückig mit der Außennabe 10 gebildet, und das Vorspannmittel 12 ist mittels eines Sicherungsrings 14 in der Außennabe 10 axial abgestützt. Alternativ ist das Gegenlager 13 mittels eines Sicherungsrings 14 gebildet, und das Vorspannmittel 12 ist mittels des einstückigen Innenabsatzes 15 der Außennabe 10 axial abgestützt.

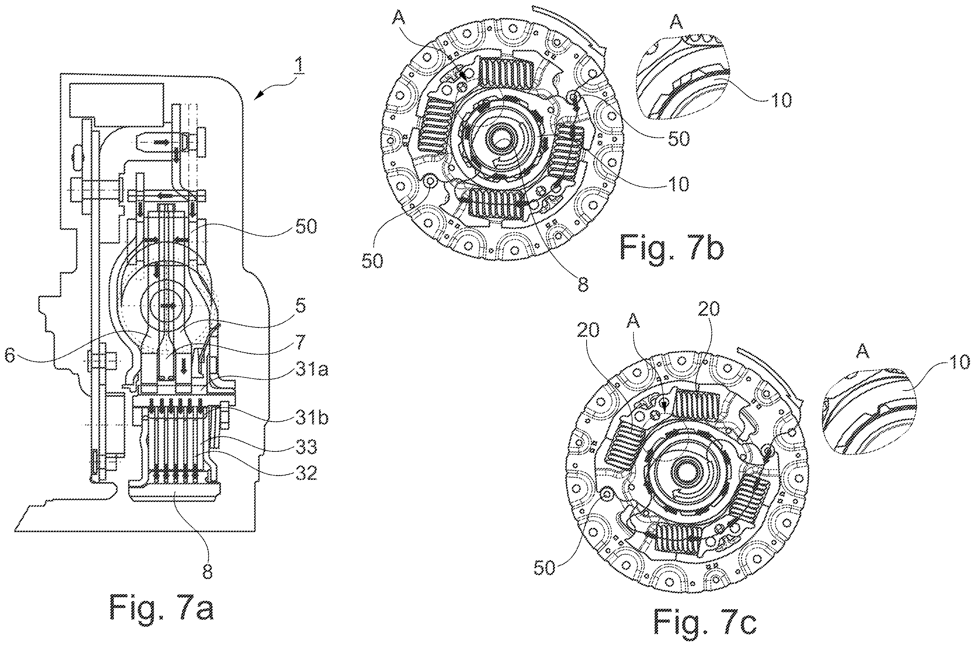

In Fig. 2 ist eine Prinzip-Skizze eines Torsionsschwingungsdämpfers 1 mit einer Rotationsachse 2 im Schnitt auf einer (gestrichelt dargestellten) Getriebeeingangswelle 9 gezeigt. Der Torsionsschwingungsdämpfer 1 ist ähnlich wie in Fig. 1 beschrieben ausgeführt und insoweit wird auf die dortige Beschreibung verwiesen. Die Seitenscheiben 22,23 sind hier mittels der Außenverzahnung 31a der Außennabe 10 axial gelagert, nämlich die erste Seitenscheibe 22 in Anlage mit einer ersten Axialstirnfläche 36 der Außenverzahnung 31a und die zweite Seitenscheibe 23 in Anlage mit einer zweiten Axialstirnfläche 37 der Außenverzahnung 31a. Der Torsionsschwingungsdämpfer 1 umfasst hier (unabhängig von zuvor genannter Lagerung der Seitenscheiben 22,23) ein Fliehkraftpendel 19, welches bevorzugt an dem Mittelflansch 7 aufgehängt ist. Das Fliehkraftpendel 19 ist axial seitlich, bevorzugt getriebeseitig, in radialer Überlappung mit der ersten Seitenscheibe 22 (und hier auch der radial kleineren zweiten Seitenscheibe 23) angeordnet. Es sind (unabhängig von zuvor genanntem) zwei Hysterese-Elemente 17 vorgesehen. Das eine Hysterese-Element 17 umfasst ein Hysterese-Vorspannmittel 38 und einen Reibbelag 25, wobei das Hysterese-Vorspannmittel 38 hier als Tellerfeder oder Membranfeder (beziehungsweise Federpaket) ausgeführt ist und unmittelbar an der ersten Seitenscheibe 22 abgestützt ist. Der korrespondierende Reibbelag 25 ist an dem ersten Nabenflansch 5 reibschlüssig abgestützt oder befestigt (und mit dem Hysterese-Vorspannmittel 38 in reibschlüssigem Kontakt). Das andere Hysterese-Element 17 ist mittels unmittelbarem (metallischen) Kontakt zwischen der zweiten Seitenscheibe 23 und dem zweiten Nabenflansch 6 gebildet. Bevorzugt ist letzteres Hysterese-Element 17 wegen des geringeren Reibungskoeffizienten für die Übertragung des Schubmoments (Getriebeeingangswelle 9 nach erste Seitenscheibe 22) in einem Kraftfahrzeug 30 eingerichtet und das Hysterese-Element 17 mit dem Reibbelag 25 wegen des höheren Reibungskoeffizienten für die Übertragung des Zugmoments (erste Seitenscheibe 22 nach Getriebeeingangswelle 9) in einem Kraftfahrzeug 30 eingerichtet (vergleiche Fig. 7). Es ist (unabhängig von zuvor genanntem) das Vorspannmittel 12 der Drehmomentbegrenzereinheit 11 mittels eines Sicherungsrings 14 an der Außennabe 10 axial abgestützt und das Gegenlager 13 ist einstückig mit der Außennabe 10 gebildet.

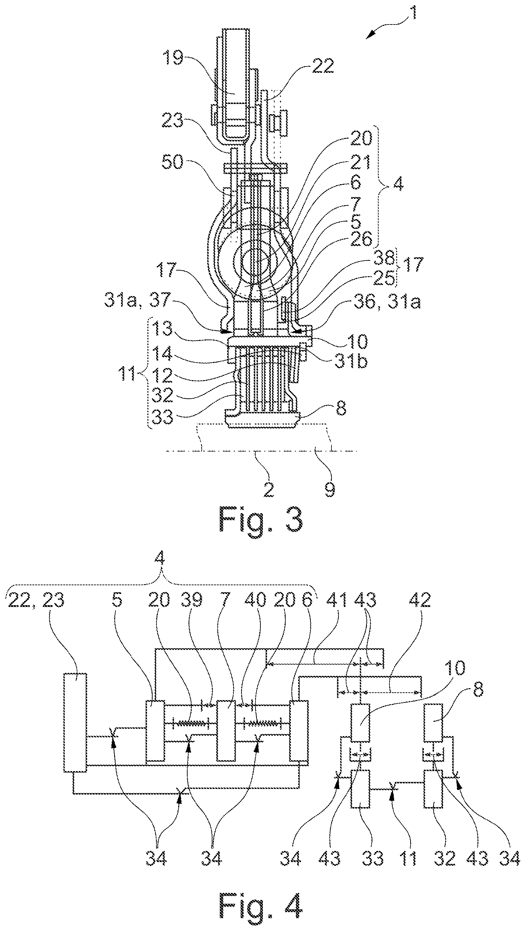

In Fig. 3 ist eine Prinzip-Skizze eines Torsionsschwingungsdämpfers 1 mit einer Rotationsachse 2 im Schnitt auf einer (gestrichelt dargestellten) Getriebeeingangswelle 9 gezeigt. Der Torsionsschwingungsdämpfer 1 ist ähnlich wie in Fig. 1 beschrieben ausgeführt und insoweit wird auf die dortige Beschreibung verwiesen. Der Torsionsschwingungsdämpfer 1 umfasst hier ebenfalls ein Fliehkraftpendel 19. Das Fliehkraftpendel 19 ist radial außerhalb der (hier radial kleineren) zweiten Seitenscheibe 23) und in radialer Teilüberlappung seitlich (bevorzugt motorseitig) der ersten Seitenscheibe 22 angeordnet.

In Fig. 4 ist ein Schaltbild eines Torsionsschwingungsdämpfers 1, wie beispielsweise in Fig. 1 gezeigt, dargestellt. Links im Bild sind die (motorseitigen) Seitenscheiben 22,23 eines Mehrflanschdämpfers 4 angeordnet, welche mittels eines Reibelements 34 mit dem benachbart angeordneten ersten Flansch 5 und dem (etwas mittig im Bild) zweiten Flansch 6 für eine gewünschte Hysteresewirkung verbunden ist und zu diesen Flanschen 5,6 jeweils einseitig den drehmomentübertragenden Anschlag 50 bildet, vorzugsweise in Form eines Abstandsbolzens, durch den die beiden Seitenscheiben 22, 23 miteinander vernietet sind. Insbesondere sind zwei Anschläge 50 vorgesehen, die um 180° zueinander beabstandet sind.

Zwischen den beiden (Naben-) Flanschen 5,6 ist ein Mittelflansch 7 angeordnet, welcher jeweils mittels einer Schraubendruckfeder 20 und einem Reibelement 34 mit den beiden benachbarten Flanschen 5,6 derart verbunden sind, dass eine relative Verdrehung bis zu einem ersten Freiwinkel 39 zu dem ersten Flansch 5 und bis zu einem zweiten Freiwinkel 40 zu dem zweiten Flansch 6 elastisch und reibbehaftet ermöglicht ist. Der erste Flansch 5 sowie der zweite Flansch 6 sind jeweils mit der Außennabe 10 drehmomentübertragend verbunden. Dabei ist in einer ersten Rotationsrichtung (beispielsweise Schubrichtung) ein erster Verdrehwinkel 41 zwischen der Außennabe 10 und dem ersten Flansch 5 frei bewegbar, also im Anregungsfalle frei bewegbar. Genauso ist in einer zweiten Rotationsrichtung (beispielsweise Zugrichtung) ein zweiter Verdrehwinkel 42 zwischen der Außennabe 10 und dem zweiten Flansch 6 frei bewegbar, also im Anregungsfalle frei bewegbar. In der jeweiligen Gegenrichtung ist ein (Winkel-) Spiel 43 vorgesehen. Die Außennabe 10 wiederum ist (mit einem Spiel 43 und einem Reibelement 34 beziehungsweise reibbehaftet) mit den Außenlamellen 33 verbunden und in funktional gleicher Weise ist die (getriebeanschlussseitige) Innennabe 8 mit den Innenlamellen 32 verbunden. Die Außenlamellen 33 und die Innenlamellen 32 bilden die Funktionseinheit der Drehmomentbegrenzereinheit 11.

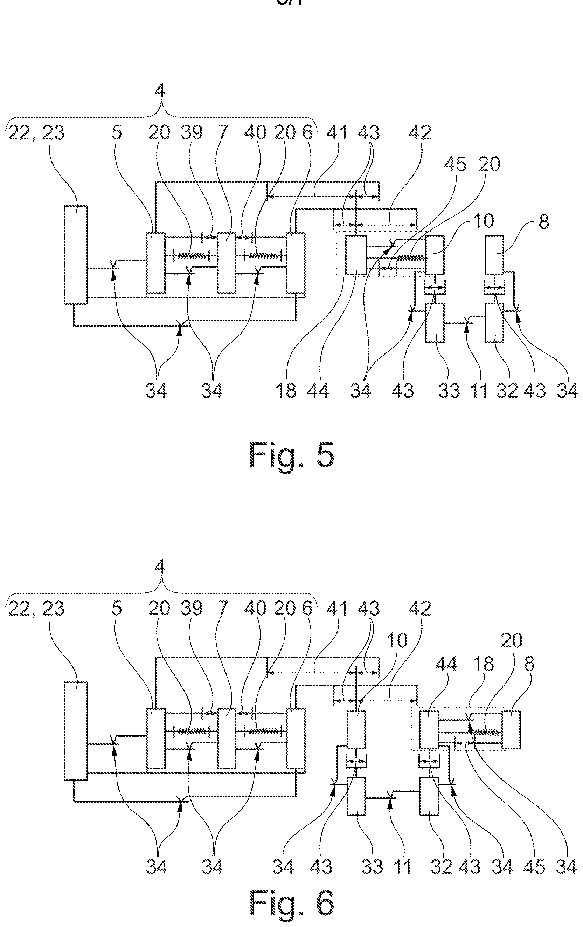

In Fig. 5 ist ein Schaltschema eines nicht beanspruchten Torsionsschwingungsdämpfers 1 dargestellt, wie es weitestgehend in Fig. 4 gezeigt ist. Insoweit wird auf die vorhergehende Beschreibung verwiesen. Hierbei ist aber zusätzlich ein Vordämpfer 18 vorgesehen, welcher zwischen die Außennabe 10 und die (Naben-) Flansche 5,6 des Mehrflanschdämpfers 4 geschaltet ist, wobei der Vordämpfer-Ausgang 44 die unmittelbare Verbindung zu den (Naben-) Flanschen 5,6 bildet und die Außennabe 10 einzig mittelbar über den Vordämpfer 18 mit dem Mehrflanschdämpfer 4 drehmomentübertragend verbunden ist. Der Vordämpfer 18 umfasst ähnlich wie der Mehrflanschdämpfer 4 ein Energiespeicherelement, beispielsweise eine Schraubendruckfeder 20, und ein Reibelement 34, sowie einen (dritten) Freiwinkel 45, um welchen die Außennabe 10 und der Vordämpfer-Ausgang 44 relativ zueinander verdrehbar sind. Die Dämpfungseigenschaften sind aber deutlich anders ausgelegt, beispielsweise weicher und mit einem größeren Dissipationsanteil.

In Fig. 6 ist ein Schaltschema eines Torsionsschwingungsdämpfers 1 dargestellt, wie es weitestgehend in Fig. 5 gezeigt ist. Insoweit wird auf die vorhergehende Beschreibung verwiesen. Hierbei ist aber ein Vordämpfer 18 vorgesehen, welcher zwischen die Innennabe 8 und die Innenlamellen 32 geschaltet ist, wobei der Vordämpfer-Ausgang 44 die unmittelbare Verbindung zu den Innenlamellen 32 bildet und die Innennabe 8 einzig mittelbar über den Vordämpfer 18 mit der Drehmomentbegrenzereinheit 11 drehmomentübertragend verbunden ist. Der Vordämpfer 18 ist beispielsweise wie in Fig. 5 beschrieben eingerichtet.

In den Figuren 7a bis 7c ist der Torsionsschwingungsdämpfer 1 aus Fig. 1 im Schnitt und in einer Draufsicht dargestellt, wobei der Drehmomentfluss im Zugbetrieb eingetragen ist, in Fig. 7b bei halbem Verdrehwinkel und in Fig. 7c bei vollem Verdrehwinkel. Die beiden Anschläge 50 sind durch Abstandsbolzen gebildet, an denen in Nominallage (entspannt) jeweils beide Flansche 5,6 anliegen. Das Moment wird über die beiden Seitenscheiben 22, 23 (in den Draufsichten teilweise entfernt bzw. freigeschnitten) im Uhrzeigersinn eingeleitet. Die Abstandsbolzen sind fest mit den Seitenscheiben 22, 23 verbunden, sodass das Moment von den Abstandsbolzen an den ersten Flansch 5 übertragen wird. Der zweite Flansch 6 überträgt das Moment an die anliegende Schraubendruckfeder 20. Diese wird komprimiert und leitet das Moment weiter an den Mittelflansch 7. Der Mittelflansch 7 überträgt das Moment weiter an die nächste Schraubendruckfeder 20. Dabei wird der Mittelflansch 7 um etwa den halben Verdrehwinkel, den der zweite Flansch 6 macht, verdreht. Somit bildet dieser Aufbau eine Reihenschaltung der beiden zuvor genannten Druckfedern 20. Die letztgenannte Druckfeder 20 gibt Moment an den ersten Flansch 5 weiter, der eine Relativbewegung zu den Seitenscheiben 22, 23 macht. Der erste Flansch 5 liegt an der Außenverzahnung 31a, nachdem ein Spiel 43, das größer als 0,0 mm und kleiner als 0,5 mm überwunden worden ist. Dann wird das Moment in die Drehmomentbegrenzereinheit 11 eingeleitet. Die Aufteilung des Moments erfolgt derart, dass der an der Drehmomentbegrenzereinheit 11 anliegende erste Flansch 5 mehr Moment überträgt als der zweite Flansch 6. Sobald das Moment einen Grenzwert erreicht hat, liegen beiden Flansche 5, 6 mit ihren Zähnen an der Außenverzahnung 31a der Drehmomentbegrenzereinheit 11, und zwei der drei Flansche 5,6,7 übertragen Moment. In dieser Drehrichtung fungiert die Außenverzahnung 31a der Drehmomentbegrenzereinheit 11 als Momentenbegrenzer.

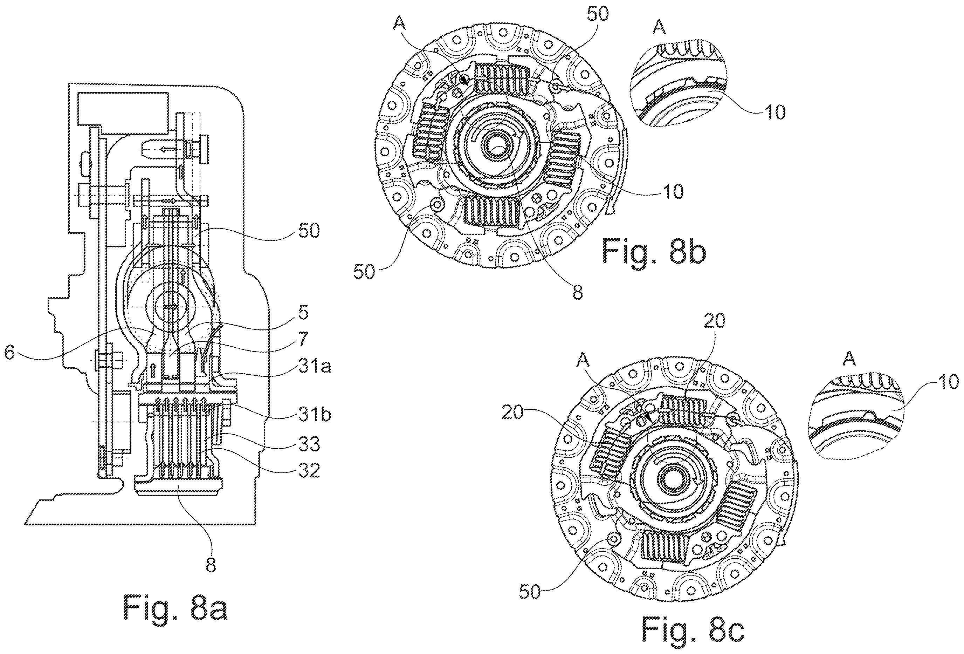

In den Figuren 8a bis 8c ist der Torsionsschwingungsdämpfer 1 aus Fig. 1 im Schnitt und in einer Draufsicht dargestellt, wobei der Drehmomentfluss im Schubbetrieb eingetragen ist, in Fig. 8b bei halbem Verdrehwinkel und in Fig. 8c bei vollem Verdrehwinkel. In entgegengesetzte Richtung kommt das Moment von der Innennabe 8 über die Drehmomentbegrenzereinheit 11 an die Außenverzahnung 31a. Auch hier muss erst das Spiel 43 zwischen der Außenverzahnung 31a und den Zähnen der Flansche 5, 6 überwunden werden. In dieser Drehrichtung gibt es eine Relativbewegung des zweiten Flansches 6 zu den beiden Seitenscheiben 22,23. Die Relativbewegung erzeugt mit dem Hysterese-Element 17 an den Seitenscheiben 22,23 zusätzliche Reibung In dieser Drehrichtung fungiert die Außenverzahnung 31a der Drehmomentbegrenzereinheit 11 als Momentenüberträger.

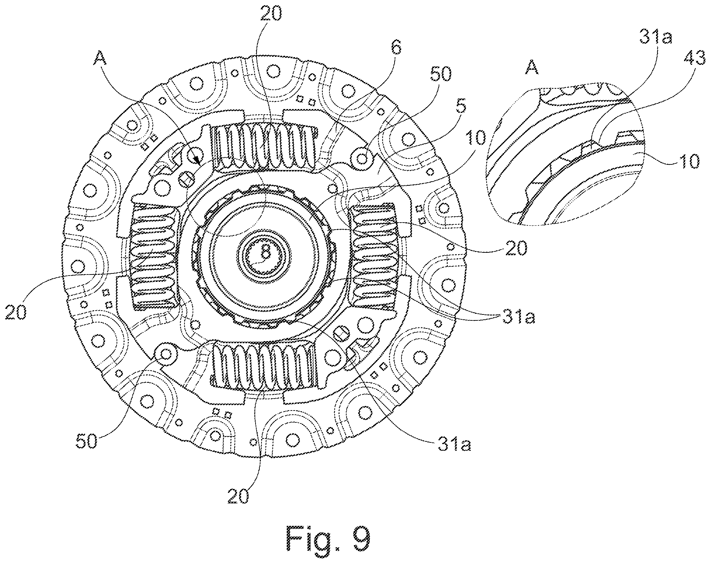

In Fig. 9 ist das Spiel 43 zwischen einem Zahn des ersten Flansches 5 und der Außenverzahnung 31a noch einmal im Detail dargestellt. Gleiches gilt hinsichtlich des zweiten Flansches 6 auf der anderen Seite des Torsionsschwingungsdämpfers 1.

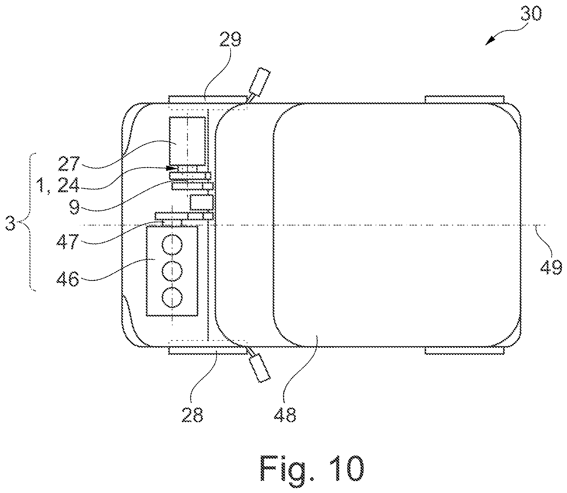

In Fig. 10 ist schematisch ein (Hybrid-) Antriebsstrang 3 in einem (Hybrid-) Kraftfahrzeug 30 gezeigt. Dabei sind eine elektrische Antriebsmaschine 27 über ihre Antriebswelle 24 (Rotorwelle) und eine Verbrennungskraftmaschine 46 über ihre Verbrennerwelle 47 zueinander parallel-geschaltet drehmomentübertragend mit dem Verbraucher bildenden linken Vortriebsrad 28 und rechten Vortriebsrad 29 verbunden. Rein optional ist das Kraftfahrzeug 30 als Fronttriebler ausgeführt, sodass die elektrische Antriebsmaschine 27 und die Verbrennungskraftmaschine 46 vor der Fahrerkabine 48 angeordnet sind. Zudem sind die elektrische Antriebsmaschine 27 und die Verbrennungskraftmaschine 46 rein optional in Queranordnung, also mit der Rotorwelle 24 und Verbrennerwelle 47 quer zu der Längsachse 49 des Kraftfahrzeugs 30 angeordnet.

Die vorangegangenen Ausführungsbeispiele betreffen einen Torsionsschwingungsdämpfer 1 mit einer Rotationsachse 2 für einen Antriebsstrang 3, aufweisend zumindest die folgenden Komponenten:
- einen Mehrflanschdämpfer 4 mit einer Mehrzahl von Flanschen 5,6,7 zum schubmomentabhängigen und zugmomentabhängigen Dämpfen von Torsionsschwingungen;
- eine Drehmomentbegrenzereinheit 11, die radial innerhalb des Mehrflanschdämpfers 4 angeordnet ist, und die Innenlamellen 32 und Außenlamellen 33 zum Begrenzen eines maximal übertragbaren Drehmoments aufweist;
- eine Außennabe 10, die radial innerhalb des Mehrflanschdämpfers 4 und radial außerhalb der Drehmomentbegrenzereinheit 11 angeordnet ist, und die den Mehrflanschdämpfer 4 mit der Drehmomentbegrenzereinheit 11 drehmomentübertragend verbindet; und
- eine Innennabe 8, die radial innerhalb der Drehmomentbegrenzereinheit 11 zum Anschließen an eine Getriebeeingangswelle 9 angeordnet ist,
wobei die Außennabe 10 eine Außenverzahnung 31a aufweist, die im schubmomentabhängigen und zugmomentabhängigen wechselnden Eingriff mit den Flanschen 5,6,7 des Mehrflanschdämpfers 4 steht, und wobei die Außennabe 10 eine Innenverzahnung 31b aufweist, in die die Außenlamellen 33 der Drehmomentbegrenzereinheit 11 eingehängt sind.

Mit dem hier vorgeschlagenen Torsionsschwingungsdämpfer ist ein ausgangsseitiges bzw. getriebeseitiges Massenträgheitsmoment besonders gering.

### Bezugszeichenliste

| | | | |
|---|---|---|---|
| 1 | Torsionsschwingungsdämpfer | 31a | Außenverzahnung |
| 2 | Rotationsachse | 31b | Innenverzahnung |
| 3 | (Hybrid-) Antriebsstrang | 32 | Innenlamellen |
| 4 | Mehrflanschdämpfer | 33 | Außenlamelle |
| 5 | erster Flansch | 34 | Reibelement |
| 6 | zweiter Flansch | 35 | Zentrierhülse |
| 7 | Mittelflansch | 36 | erste Axialstirnfläche |
| 8 | Innennabe | 37 | zweite Axialstirnfläche |
| 9 | Getriebeeingangswelle | 38 | Hysterese-Vorspannmittel |
| 10 | Außennabe | 39 | erster Freiwinkel |
| 11 | Drehmomentbegrenzereinheit | 40 | zweiter Freiwinkel |
| 12 | Vorspannmittel | 41 | erster Verdrehwinkel |
| 13 | Gegenlager | 42 | zweiter Verdrehwinkel |
| 14 | Sicherungsring | 43 | Spiel |
| 15 | Innenabsatz der Außennabe | 44 | Vordämpfer-Ausgang |
| 16 | Außenabsatz der Außennabe | 45 | dritter Freiwinkel (Vordämpfer) |
| 17 | Hysterese-Element | 46 | Verbrennungskraftmaschine |
| 18 | Vordämpfer | 47 | Verbrennerwelle |
| 19 | Fliehkraftpendel | 48 | Fahrerkabine |
| 20 | Schraubendruckfeder | 49 | Längsachse |
| 21 | Federachse | 50 | Anschlag |
| 22 | erste Seitenscheibe | | |
| 23 | zweite Seitenscheibe | | |
| 24 | Antriebswelle | | |
| 25 | Reibbelag | | |
| 26 | Zentrierelement | | |
| 27 | elektrische Antriebsmaschine | | |
| 28 | linkes Vortriebsrad | | |
| 29 | rechtes Vortriebsrad | | |
| 30 | (Hybrid-) Kraftfahrzeug | | |

## Patentansprüche

1. Torsionsschwingungsdämpfer (1) mit einer Rotationsachse (2) für einen Antriebsstrang (3), aufweisend zumindest die folgenden Komponenten:
- einen Mehrflanschdämpfer (4) mit einer Mehrzahl von Flanschen (5,6,7) zum schubmomentabhängigen und zugmomentabhängigen Dämpfen von Torsionsschwingungen;
- eine Drehmomentbegrenzereinheit (11), die radial innerhalb des Mehrflanschdämpfers (4) angeordnet ist, und die Innenlamellen (32) und Außenlamellen (33) zum Begrenzen eines maximal übertragbaren Drehmoments aufweist;
- eine Außennabe (10), die radial innerhalb des Mehrflanschdämpfers (4) und radial außerhalb der Drehmomentbegrenzereinheit (11) angeordnet ist, und die den Mehrflanschdämpfer (4) mit der Drehmomentbegrenzereinheit (11) drehmomentübertragend verbindet; und
- eine Innennabe (8), die radial innerhalb der Drehmomentbegrenzereinheit (11) zum Anschließen an eine Getriebeeingangswelle (9) angeordnet ist,
wobei die Außennabe (10) eine Innenverzahnung (31b) aufweist, in die die Außenlamellen (33) der Drehmomentbegrenzereinheit (11) eingehängt sind, **dadurch gekennzeichnet, dass** die Außennabe (10) eine Außenverzahnung (31a) aufweist, die im schubmomentabhängigen und zugmomentabhängigen wechselnden Eingriff mit den Flanschen (5,6,7) des Mehrflanschdämpfers (4) steht.

2. Torsionsschwingungsdämpfer (1) nach Anspruch 1, wobei die Drehmomentbegrenzereinheit (11) ein Vorspannmittel (12) und ein Gegenlager (13) aufweist, zwischen denen die Innenlamellen (32) und Außenlamellen (33) zum Begrenzen des zwischen der Innennabe (8) und der Außennabe (10) maximal übertragbaren Drehmoments in axialer Richtung abwechselnd angeordnet sind, und das Vorspannmittel (12) und das Gegenlager (13) axial an der Außennabe (10) abgestützt sind.

3. Torsionsschwingungsdämpfer (1) nach Anspruch 2, wobei das Vorspannmittel (12) und das Gegenlager (13) radial innerhalb der Außennabe (10) angeordnet sind.

4. Torsionsschwingungsdämpfer (1) nach Anspruch 2 oder 3, wobei das Gegenlager (13) einstückig mit der Außennabe (10) gebildet ist und das Vorspannmittel (12) mittels eines Sicherungsrings (14) in der Außennabe (10) axial abgestützt ist, oder wobei das Gegenlager (13) mittels eines Sicherungsrings (14) gebildet ist und das Vorspannmittel (12) mittels eines einstückigen Innenabsatzes (15) der Außennabe (10) axial abgestützt ist.

5. Torsionsschwingungsdämpfer (1) nach einem der Ansprüche 1 bis 4, wobei der Mehrflanschdämpfer (4) zumindest einen Anschlag (50) aufweist, mit dem einer der Flansche (5,6,7) bei Schubmomentübertragung in Anlage kommen kann, und mit demselben ein andere der Flansche (5,6,7) bei Zugmomentübertragung in Anlagen kommen kann, wobei die Anlage des jeweiligen Flansches (5,6) am Anschlag (50) spielfrei ist, während der gleichzeitige Eingriff des jeweiligen Flansches (5,6) mit der Außennabe (10) spielbehaftet ist.

6. Torsionsschwingungsdämpfer (1) nach einem der Ansprüche 1 bis 5, wobei innennabenseitig und/oder außennabenseitig ein Vordämpfer (18) vorgesehen ist.

7. Torsionsschwingungsdämpfer (1) nach einem der Ansprüche 1 bis 6, wobei zumindest drei Flansche (5,6,7) zueinander in Reihe geschaltet sind.

8. Torsionsschwingungsdämpfer (1) nach einem der Ansprüche 1 bis 7, wobei weiterhin zumindest ein Fliehkraftpendel (19) vorgesehen ist,
wobei bevorzugt zumindest eines der Fliehkraftpendel (19) an einem axial mittleren Flansch (7) von zumindest drei Flanschen (5,6,7) fixiert ist.

9. Torsionsschwingungsdämpfer (1) nach einem der Ansprüche 1 bis 8, wobei der Mehrflanschdämpfer (4) zumindest eine Schraubendruckfeder (20) mit gerader Federachse (21) zwischen der Mehrzahl von Flanschen (5,6,7) umfasst,
wobei bevorzugt die zumindest eine Schraubendruckfeder (20) radial einzig von zumindest einem der Flansche (5,6,7) geführt ist.

10. Torsionsschwingungsdämpfer (1) nach einem der Ansprüche 1 bis 9, wobei zumindest eine Seitenscheibe (22,23) zum Anschließen an eine Antriebswelle (24) vorgesehen ist, wobei die zumindest eine Seitenscheibe (22,23) anschlussseitig mit dem Mehrflanschdämpfer (4) drehmomentübertragend verbunden ist,
wobei bevorzugt die zumindest eine Seitenscheibe (22,23) im Betrieb des Torsionsschwingungsdämpfers (1) von einer bzw. der Schraubendruckfeder (20) beabstandet ist.

11. Torsionsschwingungsdämpfer (1) nach Anspruch 10, wobei zwischen der zumindest einen Seitenscheibe (22,23) und einem der Flansche (5,6) zumindest ein Hysterese-Element (17) gebildet ist,
wobei bevorzugt unter axialer Hysterese-Vorspannung ein erster Flansch (5) mit einer ersten Seitenscheibe (22) in mittels eines Reibbelags (25) reibschlüssigen Kontakt ist und ein zweiter Flansch (6) mit einer zweiten Seitenscheibe (23) in unmittelbarem reibschlüssigen Kontakt ist.

12. Torsionsschwingungsdämpfer (1) nach einem der Ansprüche 1 bis 11, wobei der Mehrflanschdämpfer (4) axial benachbart drei oder mehr Flansche (5,6,7) umfasst und der zumindest eine axial-mittlere Flansch (7) auf der Außennabe (10) zentriert ist und axial von jeweils zwei axial benachbarten Flanschen (5,6) gelagert ist,
bevorzugt mittels eines reibungsarmen Zentrierelements (26).

## Claims

1. A torsional vibration damper (1) having an axis of rotation (2) for a drive train (3), having at least the following components:
- a multi-flange damper (4) having a plurality of flanges (5, 6, 7) for the shear torque-dependent and tensile torque-dependent damping of torsional vibrations;
- a torque limiter unit (11) arranged radially within the multi-flange damper (4) and having inner plates (32) and outer plates (33) for limiting a maximum transmittable torque;
- an outer hub (10) arranged radially within the multi-flange damper (4) and radially outside the torque limiter unit (11) and which outer hub connects the multi-flange damper (4) to the torque limiter unit (11) in a torque-transmitting manner; and
- an inner hub (8) arranged radially inside the torque limiter unit (11) for connection to a transmission input shaft (9), wherein the outer hub (10) has an internal toothing (31b), into which the outer plates (33) of the torque limiter unit (11) are suspended, **characterized in that** the outer hub (10) has an external toothing (31a) in alternating shear torque-dependent and tensile torque-dependent engagement with the flanges (5, 6, 7) of the multi-flange damper (4).

2. The torsional vibration damper (1) according to claim 1, wherein the torque limiter unit (11) has a pretensioning means (12) and a counter bearing (13), between which the inner plates (32) and outer plates (33) are arranged alternately in the axial direction for limiting the maximum transmittable torque between the inner hub (8) and the outer hub (10), and the pretensioning means (12) and the counter bearing (13) are supported axially on the outer hub (10).

3. The torsional vibration damper (1) according to claim 2, wherein the pretensioning means (12) and the counter bearing (13) are arranged radially within the outer hub (10).

4. The torsional vibration damper (1) according to claim 2 or 3, wherein the counter bearing (13) is formed integrally with the outer hub (10) and the pretensioning means (12) is axially supported within the outer hub (10) by means of a locking ring (14), or
wherein the counter bearing (13) is formed by means of a locking ring (14) and the pretensioning means (12) is axially supported by means of an integral inner shoulder (15) of the outer hub (10).

5. The torsional vibration damper (1) according to any one of claims 1 to **4,** wherein the multi-flange damper (4) has at least one stop (50), with which one of the flanges (5, 6, 7) can come into contact during the transmission of thrust torque, and with which another of the flanges (5, 6, 7) can come into contact during the transmission of tensile torque, wherein the contact of the respective flange (5, 6) with the stop (50) is free of play, while the simultaneous engagement of the respective flange (5, 6) with the outer hub (10) is subject to play.

6. The torsional vibration damper (1) according to any one of claims 1 to 5, wherein a pre-damper (18) is provided on the inner hub side and/or the outer hub side.

7. The torsional vibration damper (1) according to any one of claims 1 to 6, wherein at least three flanges (5, 6, 7) are connected in series with one another.

8. The torsional vibration damper (1) according to any one of claims 1 to 7, wherein at least one centrifugal pendulum (19) is further provided,
wherein preferably at least one of the centrifugal pendulums (19) is fixed to an axially central flange (7) of at least three flanges (5, 6, 7).

9. The torsional vibration damper (1) according to any one of claims 1 to 8, wherein the multi-flange damper (4) comprises at least one helical compression spring (20) with a straight spring axis (21) between the plurality of flanges (5, 6, 7), wherein preferably the at least one helical compression spring (20) is guided radially only by at least one of the flanges (5, 6, 7).

10. The torsional vibration damper (1) according to any one of claims 1 to 9, wherein at least one side disc (22, 23) is provided for connection to a drive shaft (24), wherein the at least one side disc (22, 23) is connected on the connection side to the multi-flange damper (4) in a torque-transmitting manner,
wherein the at least one side disc (22, 23) is preferably spaced from one or the helical compression spring (20) during operation of the torsional vibration damper (1).

11. The torsional vibration damper (1) according to claim 10, wherein at least one hysteresis element (17) is formed between the at least one side disc (22, 23) and one of the flanges (5, 6),
wherein, preferably under axial hysteresis pretensioning, a first flange (5) is in frictional contact with a first side disc (22) by means of a friction lining (25) and a second flange (6) is in direct frictional contact with a second side disc (23).

12. The torsional vibration damper (1) according to any one of claims 1 to 11, wherein the multi-flange damper (4) comprises three or more axially adjacent flanges (5, 6, 7) and the at least one axially central flange (7) is centred on the outer hub (10) and is axially supported by two axially adjacent flanges (5, 6),
preferably by means of a low-friction centring element (26).

## Revendications

1. Amortisseur de vibrations de torsion (1) ayant un axe de rotation (2) pour une chaîne cinématique (3), présentant au moins les composants suivants :
- un amortisseur à brides multiples (4) ayant une pluralité de brides (5, 6, 7) pour un amortissement dépendant du couple de cisaillement et dépendant du couple de traction des vibrations de torsion ;
- une unité limiteur de couple (11) qui est disposée radialement à l'intérieur de l'amortisseur à brides multiples (4) et qui présente des lamelles intérieures (32) et des lamelles extérieures (33) pour limiter un couple transmissible maximal ;
- un moyeu extérieur (10) qui est disposé radialement à l'intérieur de l'amortisseur à brides multiples (4) et radialement à l'extérieur de l'unité limiteur de couple (11), et qui relie l'amortisseur à brides multiples (4) à l'unité limiteur de couple (11) de manière à transmettre le couple ; et
- un moyeu intérieur (8) qui est disposé radialement à l'intérieur de l'unité limiteur de couple (11) pour être raccordé à un arbre d'entrée de transmission (9), dans lequel le moyeu extérieur (10) présente une denture intérieure (31b) dans laquelle sont accrochées les lamelles extérieures (33) de l'unité limiteur de couple (11), **caractérisé en ce que** le moyeu extérieur (10) présente une denture extérieure (31a) qui vient alternativement en prise, en fonction du couple de cisaillement et en fonction du couple de traction, avec les brides (5, 6, 7) de l'amortisseur à brides multiples (4).

2. Amortisseur de vibrations de torsion (1) selon la revendication 1, dans lequel l'unité limiteur de couple (11) présente un moyen de précontrainte (12) et un contre-palier (13), entre lesquels les lamelles intérieures (32) et les lamelles extérieures (33) pour limiter le couple transmissible maximal entre le moyeu intérieur (8) et le moyeu extérieur (10) sont alternativement disposées dans la direction axiale, et le moyen de précontrainte (12) et le contre-palier (13) sont axialement supportés sur le moyeu extérieur (10).

3. Amortisseur de vibrations de torsion (1) selon la revendication 2, dans lequel le moyen de précontrainte (12) et le contre-palier (13) sont disposés radialement à l'intérieur du moyeu extérieur (10).

4. Amortisseur de vibrations de torsion (1) selon la revendication 2 ou 3, dans lequel le contre-palier (13) est formé d'un seul tenant avec le moyeu extérieur (10) et le moyen de précontrainte (12) est axialement supporté dans le moyeu extérieur (10) au moyen d'une bague de verrouillage (14), ou dans lequel le contre-palier (13) est formé au moyen d'une bague de verrouillage (14) et le moyen de précontrainte (12) est axialement supporté au moyen d'un épaulement intérieur monobloc (15) du moyeu extérieur (10).

5. Amortisseur de vibrations de torsion (1) selon l'une des revendications 1 à 4, dans lequel l'amortisseur à brides multiples (4) présente au moins une butée (50) avec laquelle l'une des brides (5, 6, 7) peut venir en contact lors de la transmission du couple de cisaillement, et avec laquelle une autre des brides (5, 6, 7) peut entrer en contact lors de la transmission du couple de traction, dans lequel le contact de la bride (5, 6) respective sur la butée (50) est sans jeu, tandis que la mise en prise concomitante de la bride (5, 6) respective avec le moyeu extérieur (10) présente du jeu.

6. Amortisseur de vibrations de torsion (1) selon l'une des revendications 1 à 5, dans lequel un pré-amortisseur (18) est prévu du côté du moyeu intérieur et/ou du côté du moyeu extérieur.

7. Amortisseur de vibrations de torsion (1) selon l'une des revendications 1 à 6, dans lequel au moins trois brides (5, 6, 7) sont montées en série les unes avec les autres.

8. Amortisseur de vibrations de torsion (1) selon l'une des revendications 1 à 7, dans lequel est en outre prévu au moins un pendule centrifuge (19),
dans lequel de préférence au moins un des pendules centrifuge (19) est fixé à une bride (7) axialement centrale d'au moins trois brides (5, 6, 7).

9. Amortisseur de vibrations de torsion (1) selon l'une des revendications 1 à 8, dans lequel l'amortisseur à brides multiples (4) comprend au moins un ressort de compression hélicoïdal (20) ayant un axe de ressort droit (21) entre la pluralité de brides (5, 6, 7), dans lequel de préférence l'au moins un ressort de compression hélicoïdal (20) est guidé radialement uniquement par au moins l'une des brides (5, 6, 7).

10. Amortisseur de vibrations de torsion (1) selon l'une des revendications 1 à 9, dans lequel au moins un disque latéral (22, 23) est prévu pour être raccordé à un arbre de transmission (24), dans lequel l'au moins un disque latéral (22, 23) est relié, côté raccordement, à l'amortisseur à brides multiples (4) de manière à transmettre le couple,
dans lequel, de préférence, l'au moins un disque latéral (22, 23) est espacé d'un ou des ressorts de compression hélicoïdaux (20) pendant que l'amortisseur de vibrations de torsion (1) fonctionne.

11. Amortisseur de vibrations de torsion (1) selon la revendication 10, dans lequel au moins un élément d'hystérésis (17) est formé entre l'au moins un disque latéral (22, 23) et l'une des brides (5, 6),
dans lequel, de préférence sous précontrainte d'hystérésis axiale, une première bride (5) est en contact par friction avec un premier disque latéral (22) au moyen d'une garniture de friction (25) et une seconde bride (6) est en contact par friction direct avec un second disque latéral (23).

12. Amortisseur de vibrations de torsion (1) selon l'une des revendications 1 à 11, dans lequel l'amortisseur à brides multiples (4) comprend trois brides (5, 6, 7) ou plus axialement adjacentes et l'au moins une bride (7) axialement centrale est centrée sur le moyeu extérieur (10) et est axialement supportée par respectivement deux brides (5, 6) axialement adjacentes,
de préférence au moyen d'un élément de centrage (26) à faible friction.
